(19) 

**Europäisches Patentamt**
**European Patent Office**
**Office européen des brevets**

(11) **EP 4 592 416 A1**

(12) **EUROPEAN PATENT APPLICATION**
published in accordance with Art. 153(4) EPC

(43) Date of publication:
**30.07.2025 Bulletin 2025/31**

(21) Application number: **23903164.4**

(22) Date of filing: **10.11.2023**

(51) International Patent Classification (IPC):
*C22C 38/00* $^{(2006.01)}$  *C22C 38/04* $^{(2006.01)}$
*C22C 38/58* $^{(2006.01)}$  *B23K 11/11* $^{(2006.01)}$
*B23K 11/16* $^{(2006.01)}$  *B23K 11/24* $^{(2006.01)}$

(52) Cooperative Patent Classification (CPC):
**B23K 11/11; B23K 11/16; B23K 11/24; C22C 38/00;**
**C22C 38/04; C22C 38/58**

(86) International application number:
**PCT/JP2023/040491**

(87) International publication number:
**WO 2024/127866 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.12.2022 JP 2022199901**

(71) Applicant: **JFE Steel Corporation**
**Tokyo 100-0011 (JP)**

(72) Inventors:
• **ENDO, Reiko**
**Tokyo 100-0011 (JP)**
• **TAKASHIMA, Katsutoshi**
**Tokyo 100-0011 (JP)**

(74) Representative: **Haseltine Lake Kempner LLP**
**Bürkleinstrasse 10**
**80538 München (DE)**

(54) **RESISTANCE SPOT-WELDED JOINT AND RESISTANCE SPOT WELDING METHOD THEREFOR**

(57) An object is to provide a resistance spot welded joint and a related resistance spot welding method. In a resistance spot welded joint of the present invention, two or more steel sheets including at least one high-strength steel sheet are resistance spot welded. The high-strength steel sheet has a specific chemical composition. The heat-affected zone of the resistance spot weld has a first region that has an average hardness Hv satisfying $0.85 \times Hvm > Hv$ in relation to the hardness Hvm of a nugget central portion, and the average number density of carbide particles having a size of 100 nm or more is 10 particles or more per 5 $\mu m^2$ of a steel sheet cross section in the first region.

FIG. 1

EP 4 592 416 A1

**Description**

Technical Field

The present invention pertains to a resistance spot welded joint and a related resistance spot welding method.

Background Art

In recent years, various types of high-strength steel sheets (also called high-tensile steel sheets) have been increasingly used for automobile bodies in order to reduce weight and thereby to improve fuel efficiency, and also in order to ensure crash safety. On automobile assembly lines, resistance spot welding is mainly used to join components.

Increasing the strength of steel sheets tends to be accompanied by embrittlement of the microstructures in nuggets and HAZ, and consequently the welds show high sensitivity to hydrogen embrittlement. Furthermore, in resistance spot welding, hydrogen stemming from, for example, anti-rust oils and coating layers on the steel sheet surface is absorbed into resistance spot welds. Thus, welded joints formed by resistance spot welding of high-strength steel sheets are likely to undergo delayed fracture.

Fatigue strength is an index for evaluating the quality of resistance spot welds. Fatigue strength does not increase along with the strengthening of steel sheets. Fatigue strength decreases as a result of a nugget becoming hard due to high alloying of steel sheets having been increased in strength. Furthermore, in view of the fact that a resistance spot weld is subjected to a low load multiple times, it is probable that the fatigue strength is affected not only by the nugget hardness but also by the hardness, the toughness, and the microstructures of a heat-affected zone or a region from a nugget edge to sheet separation.

In the present invention, attentions thus have been drawn to a region near sheet separation, and techniques for enhancing delayed fracture resistance and fatigue strength have been studied.

For example, Patent Literatures 1 to 3 disclose techniques directed to solving the problems discussed above. Patent Literature 1 describes a method for spot welding high-strength steel sheets. Here, at least one high-strength steel sheet is used that has a tensile strength of 750 to 1850 MPa, a thickness of 0.8 to 3.6 mm, and an equivalent carbon content in the range of 0.22 to 0.55 mass%. Weld heating and post-heating are performed under conditions where the electrode force, the current, and the current passing time satisfy predetermined relational expressions, and then the workpieces are held between the electrodes. According to the disclosure, the above control provides enhancements in, for example, cross tension strength, fatigue strength, and delayed fracture resistance.

Patent Literature 2 discloses a method for spot welding high-strength steel sheets containing 0.15 mass% or more carbon and having a tensile strength of 980 MPa or more. In the method, spot welding is performed by three steps including a first heating step of forming a nugget, a cooling step that follows the first heating step and during which the current of welding is zero, and a second heating step that follows the cooling step and softens the nugget.

Patent Literature 3 discloses a resistance spot welding method that includes a main heating step in which a nugget portion is formed by passing a first current $I_1$ (kA) while applying a first electrode force $F_1$ (kN), and a post-heating step in which the nugget portion is cooled by passing a second current $I_2$ (kA) for a current passing time $t_a$ (ms), wherein the post-heating step includes a first pressing step in which the first electrode force $F_1$ (kN) is maintained for a pressing delay time $t_b$ (ms) from the start of the post-heating step, and a second pressing step in which the workpieces from the first pressing step are pressed at a second electrode force $F_2$ (kN).

Citation List

Patent Literature

PTL 1: Japanese Patent No. 6194765
PTL 2: Japanese Patent No. 6107939
PTL 3: Japanese Patent No. 6315161

Summary of Invention

Technical Problem

In Patent Literature 1, the cooling time is extremely short. This fact impedes enhancing the fatigue strength of the steel sheets having a high equivalent carbon content. Furthermore, Patent Literature 1 only describes that the technique can enhance the toughness of spot welds and reduce the tensile residual stress in spot welds, but the mechanism behind this is unclear. In contrast, the technique of the present invention, as will be described later, utilizes a mechanism in which stress is alleviated by softening of the hardness of a gapped sheet portion (namely, a sheet separation portion). Thus, it can be said that the present invention differs in technical idea from Patent Literature 1.

In Patent Literature 2, the nugget is softened in the second heating step by tempering the martensitic microstructure formed in the first heating step into tempered martensite. That is, Patent Literature 2 involves tempering of the microstructure inside the nugget, whereas the microstructure inside the nugget according to the present invention that will be described later is not tempered and is hard. It can therefore be said that the technical ideas of these two are different.

In Patent Literature 3, the amount of hydrogen absorbed into a weld metal is reduced and the nugget size reduction due to the occurrence of splash is avoided by combining the main heating step and the post-heating step. The post-heating step in Patent Literature 3 is a step in which the nugget portion is cooled while applying a current. Because the method does not include a cooling step during the heating steps except a holding time, it is impossible to reduce the hardness of (that is, soften) a region near sheet separation. In contrast, the present invention, as will be described later, avoids the entry of hydrogen into the steel by softening a region near sheet separation. It can therefore be said that the technical ideas of these two are different.

When steel sheets with a tensile strength of 780 MPa or more, in particular, high-strength steel sheets with a tensile strength of 780 MPa or more and a C content of 0.05 to 0.6 mass% are resistance spot welded by single energization alone, the nugget and the HAZ tend to be brittle and a high residual stress will remain in the HAZ to cause delayed fracture. Furthermore, fatigue strength is not enhanced.

The present invention has been made in view of the problems discussed above. It is therefore an object of the present invention to provide a resistance spot welded joint enhanced in delayed fracture resistance and fatigue strength that is obtained by resistance spot welding of a plurality of steel sheets including at least one high-strength steel sheet, and a related resistance spot welding method. Solution to Problem

In order to solve the problems described above, the present inventors have conducted extensive studies using sheet assemblies including at least one high-strength steel sheet and have explored the mechanism of the decline in delayed fracture resistance and approaches to enhancing fatigue strength.

As already mentioned, delayed fracture resistance is lowered as steel sheets are increased in strength. Possible causes of delayed fracture are the hardness of a nugget edge that serves as an origin of fracture, and the influence of segregation and inclusions present in the nugget edge. In order to eliminate these causes, it is effective to prevent hardening of the nugget edge and to reduce the residual stress in the nugget edge.

Specifically, the studies herein have shown that delayed fracture resistance can be enhanced by lowering the hardness of a specific region near sheet separation. The reasons behind this include that softening the hardness near sheet separation reduces the residual stress in a region from the nugget edge to the sheet separation and thereby makes delayed fracture unlikely to occur.

Furthermore, it has been shown that softening of the hardness near the sheet separation can also enhance fatigue strength. The reasons behind this include, similar to above, that lowering the hardness near the sheet separation reduces the residual stress in a region from the nugget edge to the sheet separation.

That is, the finding is that lowering of the hardness of a specific region near the sheet separation leads to less residual stress in a region from the nugget edge to the sheet separation and consequently enhances delayed fracture resistance and further fatigue strength.

The present invention is based on the findings described above and the gist thereof is as follows.

[1] A resistance spot welded joint having a resistance spot weld in which two or more steel sheets including at least one high-strength steel sheet are resistance spot welded, wherein

the high-strength steel sheet has a chemical composition including, in mass%:

C: 0.05 to 0.6%,
Si: 0.1 to 2.0%,
Mn: 1.5 to 4.0%,
P: 0.10% or less,
S: 0.005% or less,
N: 0.001 to 0.010%, and
O: 0.03% or less, the balance being Fe and incidental impurities; and

the resistance spot weld is such that:

a heat-affected zone has a first region that is a square region having an end of sheet separation as a central point of the square and having a segment with a length L (mm), the length of the segment satisfying expression (1) in relation to a thickness t (mm) of the high-strength steel sheet or the thinnest one of the high-strength steel sheets,

an average hardness Hv of the first region satisfies expression (2) in relation to a hardness Hvm of a nugget central portion, and

an average number density of carbide particles having a size of 100 nm or more is 10 particles or more per 5 $\mu m^2$ of a steel sheet cross section in the first region,

$$0.5 \times t \geq L \quad \cdots (1)$$

$$0.85 \times Hvm > Hv \quad \cdots (2).$$

[2] The resistance spot welded joint according to [1], wherein the chemical composition of the high-strength steel sheet further includes, in mass%, one, or two or more selected from:

Cu: 0.8% or less,
Ni: 1.0% or less,
Mo: 1.0% or less,
Cr: 1.0% or less,
Nb: 0.080% or less,
V: 0.50% or less,
Ti: 0.20% or less,
B: 0.005% or less,
Al: 2.0% or less, and
Ca: 0.005% or less.

[3] The resistance spot welded joint according to [1] or [2], wherein the high-strength steel sheet has a coating layer on a steel sheet surface.

[4] A resistance spot welding method for producing the resistance spot welded joint described in any one of [1] to [3], including joining two or more overlapped steel sheets including at least one of the high-strength steel sheets by resistance spot welding, wherein

the resistance spot welding includes:

a main heating step of forming a nugget by applying a current $I_1$ (kA); and
a tempering post-heat treatment step including:

a first cooling process of maintaining the steel sheets in a non-energized state for a cooling time $t_{c1}$ (ms) shown in expression (3),
a first heating process of subsequently applying a current $I_2$ (kA) shown in expression (4) for a current passing time $t_2$ (ms) shown in expression (5),
a second cooling process of subsequently maintaining the steel sheets in a non-energized state for a cooling time $t_{c2}$ (ms) shown in expression (6), and
a second heating process of subsequently applying a current $I_3$ (kA) shown in expression (7) for a current passing time $t_3$ (ms) shown in expression (8),

$$800 \leq t_{c1} \quad \cdots (3)$$

$$1.01 \times I_1 \leq I_2 \leq 1.4 \times I_1 \quad \cdots (4)$$

$$100 < t_2 \leq 500 \quad \cdots (5)$$

$$0 < t_{c2} \leq 300 \quad \cdots (6)$$

$$I_2 < I_3 \leq 1.5 \times I_2 \quad \cdots (7)$$

$$0 < t_3 < 500 \quad \cdots (8).$$

Advantageous Effects of Invention

According to the present invention, steel sheets including a high-strength steel sheet can be welded in a way that the resistance spot weld of the resultant resistance spot welded joint is prevented from hardening of a nugget edge and the residual stress in a region from the nugget edge to sheet separation is reduced. In this manner, the present invention can enhance the delayed fracture resistance and the fatigue strength of the resistance spot welded joint, thus attaining significant effects in industry.

Brief Description of Drawings

[Fig. 1] Fig. 1 is a sectional view schematically illustrating the periphery of a resistance spot weld of a resistance spot welded joint according to an embodiment of the present invention.
[Fig. 2] Fig. 2 is a sectional view schematically illustrating an exemplary peripheral region including sheet separation in the resistance spot welded joint illustrated in Fig. 1.
[Fig. 3] Fig. 3 is a sectional view schematically illustrating another exemplary peripheral region including sheet separation in the resistance spot welded joint illustrated in Fig. 1.
[Fig. 4] Fig. 4 is a view illustrating an example of determining the average hardness (Hv) of a first region in the present invention.
[Fig. 5] Fig. 5 is a sectional view illustrating an example of a resistance spot welding method of the present invention.
[Fig. 6] Fig. 6 is a diagram illustrating an exemplary energization pattern in a resistance spot welding method of the present invention.

Description of Embodiments

The present invention will be described hereinbelow. It should be noted that the present invention is not limited to the embodiments below.

[Resistance spot welded joints]

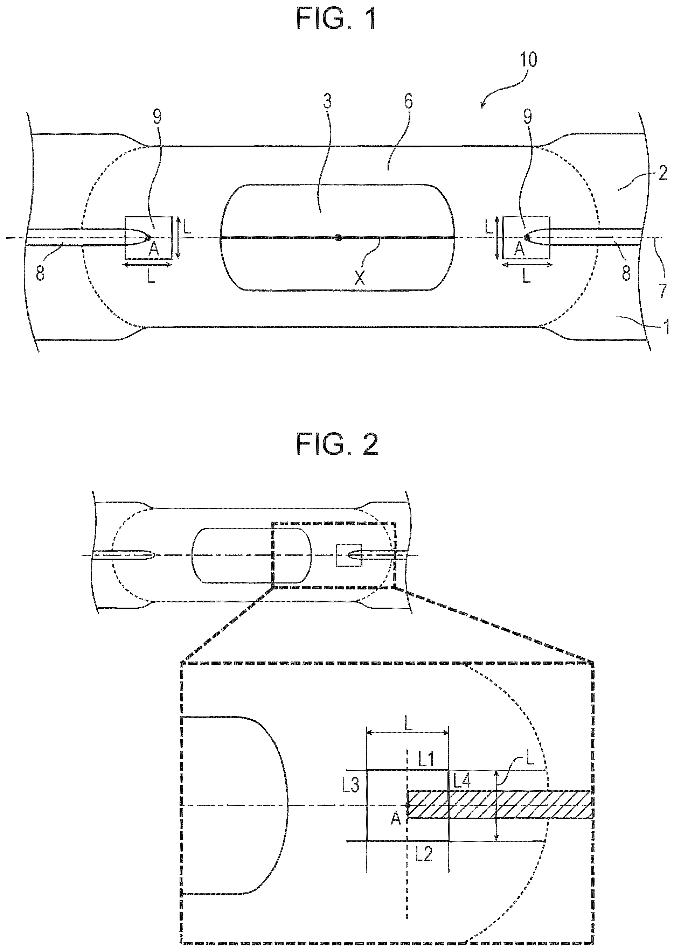

First, a resistance spot welded joint of the present invention will be described with reference to Figs. 1 to 3. Figs. 1 to 3 illustrate exemplary through-thickness sectional views of a resistance spot weld and the periphery thereof in a resistance spot welded joint of the present invention. In the examples illustrated in Figs. 1 to 3, the number of steel sheets that are overlapped is two.

An aspect of the present invention resides in a resistance spot welded joint (hereinafter, written as the "welded joint") that has a resistance spot weld produced by resistance spot welding of steel sheets that are overlapped. The steel sheets that are overlapped include at least one or more high-strength steel sheets described later. The number of steel sheets is two or more and is not particularly limited. The upper limit of the number of steel sheets is not particularly specified but is preferably four or less.

Fig. 1 illustrates a welded joint produced by resistance spot welding of two overlapped steel sheets. A lower steel sheet 1 and/or an upper steel sheet 2 is a high-strength steel sheet. In the example illustrated in Fig. 1, the upper steel sheet 2 is a high-strength steel sheet. As will be described later, the high-strength steel sheet may have a coating layer. Fig. 1 omits the illustration of a coating layer on the steel sheet surface. A resistance spot weld 10, which will be described below, is formed at a steel sheet mating surface 7 (namely, the lap surface) of the steel sheets 1 and 2.

[Resistance spot welds]

The resistance spot weld in the welded joint of the present invention will be described in detail. As illustrated in Fig. 1, the resistance spot weld (hereinafter, written as the "weld") in the welded joint has a nugget 3 and a heat-affected zone (HAZ) 6 formed so as to surround the nugget 3. Sheet separations 8 extend from the outer peripheral region in the heat-affected zone 6 toward the base metal zone.

In the present invention, the microstructures and characteristics of a specific region near the sheet separation are specified as follows.

As illustrated in Fig. 1, the heat-affected zone 6 has a first region that is a square region having an end of the sheet separation 8 of the weld 10 as a central point of the square and having a segment with a length L (mm). The length (L) of the segment satisfies expression (1) in relation to the thickness t (mm) of the high-strength steel sheet (the upper steel sheet 2 in the example illustrated in Fig. 1).

The average hardness (Hv) of the first region satisfies expression (2) in relation to the hardness (Hvm) of a central portion of the nugget 3, and the average number density of carbide particles having a size of 100 nm or more is 10 particles or more per 5 $\mu$m$^2$ of a steel sheet cross section in the first region.

$$0.5 \times t \geq L \quad \cdots (1)$$

$$0.85 \times Hvm > Hv \quad \cdots (2)$$

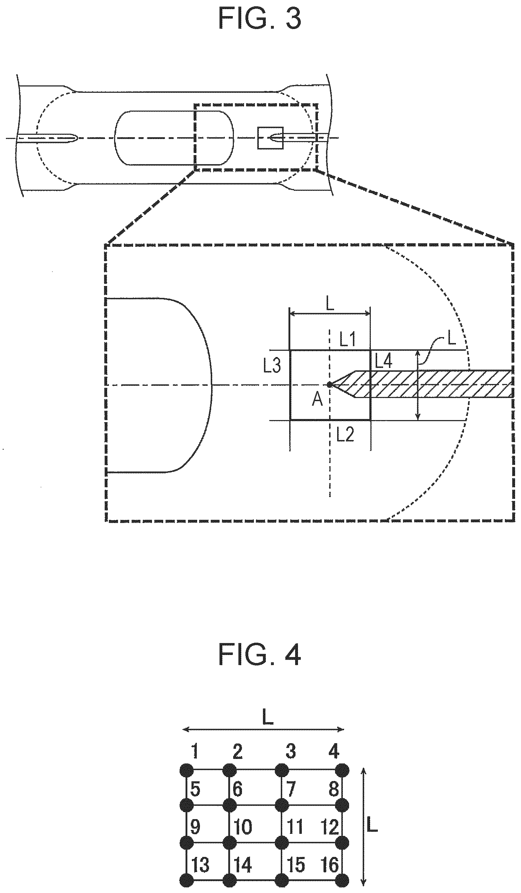

Here, the "first region" is a square region that is surrounded by segments L1 and L2 that are equally separate upward and downward from the center point A as the origin and are horizontal to the steel sheet mating surface 7, and by segments L3 and L4 that are equally separate to the right and left from the center point A as the origin and are perpendicular to the steel sheet mating surface 7 (see Figs. 2 and 3). Furthermore, the "end of the sheet separation 8" indicates an end of the sheet separation 8 located on the same side as the heat-affected zone 6. The end of the sheet separation may be U-shaped as illustrated in the example of Fig. 2 or may be V-shaped as illustrated in the example of Fig. 3. Furthermore, the "center point" indicates the intersection of the end of the sheet separation and the steel sheet mating surface 7 (the point A illustrated in Fig. 1).

The "thickness (t) of the high-strength steel sheet" indicates the smallest sheet thickness. When, for example, two or more high-strength steel sheets having different thicknesses are overlapped, the thickness t is the thickness of the thinnest high-strength steel sheet.

Hardness variations are present from the center of the nugget to the heat-affected zone. Furthermore, the size of the nugget and the heat-affected zone varies depending on the sheet thickness. If the relationship in expression (1) is not satisfied, the hardness measurement may take place at an unintended location (namely, in an unintended region). Thus, the length (L) of the segment is limited to (0.5 × t) mm or less. To carry out the tests described in Examples of the present invention, the length (L) of the segment of the first region is preferably greater than 0 mm, and more preferably 1.0 mm or more.

The first region in the present invention is provided at a location away from the end of the nugget. The reason for this setting is because this location is a place where a crack starts and grows, and has a large influence on the progress of cracking, such as fatigue strength or delayed fracture.

In the present invention, the first region is appropriately tempered as described later and thereby delayed fracture resistance and fatigue strength are enhanced.

[Hardness ratio]

It is important that the average hardness (Hv) of the first region satisfy expression (2) in relation to the hardness Hvm of a nugget central portion. If expression (2) is not satisfied, the residual stress in the first region cannot be reduced and consequently delayed fracture is facilitated. Thus, the average hardness of the first region is limited to less than 0.85 times the hardness of a nugget central portion. Preferably, the average hardness of the first region is 0.80 times or less the hardness of a nugget central portion.

The upper limit of the average hardness of the first region is not particularly specified. In view of appropriate tempering, the average hardness of the first region is preferably 0.50 times or more the hardness of a nugget central portion, and more preferably 0.55 times or more the hardness of a nugget central portion.

The above hardnesses are the Vickers hardness measured in accordance with JIS Z2244 (2020).

The "average hardness (Hv) of the first region" may be measured in the following manner. Specifically, as described later in Examples, the hardness is measured at 0.2 mm intervals from the steel sheet mating surface 7 into the direction of the thickness of the high-strength steel sheet, and also at 0.2 mm spacings on straight lines parallel to the steel sheet mating surface 7. The range of measurement extends from the segment L3 to the segment L4 of the first region. The hardnesses in this range of measurement are averaged to give the "average hardness of the first region".

When, for example, the upper steel sheet 2 is a high-strength steel sheet as is the case in Fig. 1, the range of measurement is 0.2 mm above the steel sheet mating surface 7 into the direction of the thickness of the steel sheet 2.

When, for example, both the upper and lower steel sheets 1 and 2 are high-strength steel sheets, although not illustrated in the drawings, the measurement is performed in the same manner as described above with respect to the high-strength steel sheet having a lower strength (a lower tensile strength).

Furthermore, the "hardness (Hvm) of a nugget central portion" indicates the hardness at the central location within the nugget 3. Specifically, as described later in Examples, the hardness is measured with respect to a position located on the steel sheet mating surface 7 and at the center of the nugget 3, and the obtained value is taken as the "hardness of a nugget central portion."

[Carbide in the first region]

In the present invention, the average number density of carbide in the first region is specified as an index of tempering. Specifically, the average number density of carbide particles having a size of 100 nm or more is 10 particles or more per 5 $\mu m^2$ of a steel sheet cross section in the first region. As will be described later in Examples with reference to Fig. 4, the present invention attains the functions and effects described later as long as the above average number density of carbide is satisfied in at least one 5 $\mu m$ square field of view of the first region.

The reason why the size of carbide particles is limited to 100 nm or more is to make sure that tempering has been effected sufficiently and coarse carbide particles have been formed. If, however, the size of carbide particles is larger, there is a possibility that the particles are precipitates other than carbide that have been generated by tempering. Thus, it is preferable that the size of carbide particles be 500 nm or less.

If the first region is such that the average number density of carbide particles having the above size is less than 10 particles in a 5 $\mu m$ square field of view of a steel sheet cross section, tempering is insufficient. As a result, an increased amount of residual stress remains in the vicinity of the first region to facilitate cracking into the weld, and delayed fracture resistance and fatigue strength are lowered. Thus, the average number density is limited to 10 particles or more per 5 $\mu m^2$ of a steel sheet cross section. The average number density is more preferably 15 particles or more per 5 $\mu m^2$ of a steel sheet cross section. The upper limit of the average number density is not particularly specified. Considering the size of carbide particles, the average number density is preferably 450 particles or less per 5 $\mu m^2$ of a steel sheet cross section, more preferably 400 particles or less per 5 $\mu m^2$ of a steel sheet cross section, and still more preferably 200 particles or less per 5 $\mu m^2$ of a steel sheet cross section.

In the present invention, the size of carbide particles and the average number density of carbide may be measured by the methods described later in Examples.

[Microstructures in the first region] (preferred condition)

In order for the hardness of the first region to satisfy the hardness ratio described above, it is desirable to control the microstructures in the first region to include a tempered martensitic microstructure. This control makes it possible to reduce the residual stress from the nugget edge to the sheet separation more effectively. To obtain such functions and effects, it is preferable that tempered martensite in the first region represent an area fraction of 50% or more relative to the entire first region. The area fraction of tempered martensite in the first region is more preferably 55% or more.

The upper limit of tempered martensite in the first region is not particularly specified. As already mentioned, the residual stress can be effectively reduced even when the microstructures in the first region consist of 100% area fraction of tempered martensite. Tempered martensite in the first region preferably represents 100% or less, and more preferably 98% or less.

The remaining microstructures other than tempered martensite in the first region are martensite and/or ferrite. If the microstructures other than tempered martensite (the remaining microstructures) represent a high area fraction, it becomes difficult to achieve a reduction in residual stress. For this reason, the total area fraction of the remaining microstructures is preferably 50% or less, more preferably 45% or less, still more preferably 40% or less, and further preferably 30% or less. The total area fraction of the remaining microstructures may be 0%.

In the present invention, the area fraction of tempered martensite can be judged to be in the above-described range by appropriately controlling the "average number density of carbide" that is an index of tempering.

Although not illustrated in the drawings, when three or more steel sheets are welded together, the first regions are present at each steel sheet mating surface. The advantageous effects of the present invention can be obtained as long as at least one of the first regions at the steel sheet mating surface has the microstructures and characteristics described above.

[High-strength steel sheets]

The reasons why the chemical composition of the base material of the high-strength steel sheet in the welded joint of the present invention are limited will be described. In the following description, "%" in the chemical composition indicates "mass%" unless otherwise specified.

C: 0.05 to 0.6%

Carbon is an element that contributes to the strengthening of steel. If the C content is less than 0.05%, the steel is low in strength and will not give steel sheets with a tensile strength of 780 MPa or more. If, on the other hand, the C content is more than 0.6%, the strength of steel sheets is increased but the amount of hard martensite is excessively large and the number of microvoids increases. In addition, nuggets and HAZ around the nuggets in welded joints are excessively increased in hardness and become brittle, making it difficult to enhance fatigue strength. Furthermore, the embrittled fused portions are prone to cracking to increase the risk of delayed fracture. Thus, the C content is limited to 0.05 to 0.6%. The C content is preferably 0.10% or more. The C content is preferably 0.50% or less, and more preferably 0.45% or less.

Si: 0.1 to 2.0%

0.1% or more silicon effectively strengthens steel. Silicon is a ferrite forming element and advantageously acts in the formation of ferrite in nugget edges. On the other hand, more than 2.0% silicon strengthens steel but may adversely affect toughness. Thus, the Si content is limited to 0.1 to 2.0%. The Si content is preferably 0.2% or more. The Si content is preferably 1.8% or less.

Mn: 1.5 to 4.0%

If the Mn content is less than 1.5%, long time cooling of welds in the present invention is not necessarily required to obtain high fatigue strength of welded joints. If, on the other hand, the Mn content is more than 4.0%, it is difficult to enhance fatigue strength and delayed fracture resistance because welds are markedly embrittled or embrittlement cracking is markedly facilitated. Thus, the Mn content is limited to 1.5 to 4.0%. The Mn content is preferably 2.0% or more. The Mn content is preferably 3.5% or less, and more preferably 2.9% or less.

P: 0.10% or less

Phosphorus is an incidental impurity. If the P content is more than 0.10%, strong segregation occurs in nugget edges of welds to make it difficult to enhance joint strength. Thus, the P content is limited to 0.10% or less. The P content is preferably 0.05% or less, and more preferably 0.02% or less. The lower limit of the P content is not particularly limited. However, excessive dephosphorization increases costs. Thus, the P content is preferably 0.005% or more.

S: 0.005% or less

Sulfur is an element that is segregated at grain boundaries to make steel brittle. Sulfur is an element that is incidentally mixed. Furthermore, sulfur sulfides and lowers the local deformability of steel sheets. Thus, the S content is limited to 0.005% or less. The S content is preferably 0.004% or less, and more preferably 0.003% or less. The lower limit of the S content is not particularly limited. However, excessive desulfurization increases costs. Thus, the S content is preferably 0.001% or more.

N: 0.001 to 0.010%

Nitrogen is an element that deteriorates the aging resistance of steel. Nitrogen is an element that is incidentally mixed. Thus, the N content is limited to 0.001 to 0.010%. The N content is preferably 0.008% or less.

O: 0.03% or less

Oxygen (O) is an element that forms nonmetallic inclusions and thereby deteriorates the cleanliness and the toughness of steel. Thus, the O content is limited to 0.03% or less. The O content is preferably 0.02% or less. The O content is preferably 0.005% or more.
The high-strength steel sheets used in the present invention contain the above elements, and the balance is Fe and incidental impurities.
In the present invention, the chemical composition described above is the basic chemical composition of the high-strength steel sheets. In the present invention, where necessary, the chemical composition may further include one, or two or more elements selected from Cu, Ni, Mo, Cr, Nb, V, Ti, B, Al, and Ca. These elements are optional and the contents thereof may be 0%.

Cu: 0.8% or less, Ni: 1.0% or less, Mo: 1.0% or less

Copper, nickel, and molybdenum are elements that can contribute to enhancing the strength of steel. However, excessive addition of copper, nickel, and molybdenum deteriorates toughness. Thus, when these elements are added, the Cu content is limited to 0.8% or less, the Ni content is limited to 1.0% or less, and the Mo content is limited to 1.0% or less. The Cu content is more preferably 0.6% or less. The Cu content is preferably 0.005% or more, and more preferably 0.006% or more. The Ni content is more preferably 0.8% or less. The Ni content is preferably 0.01% or more. The Mo content is more preferably 0.8% or less. The Mo content is preferably 0.005% or more, and more preferably 0.006% or more.

Cr: 1.0% or less

Chromium is an element that can enhance strength by improving hardenability. However, excessive addition of more than 1.0% chromium may result in poor toughness of HAZ. Thus, when chromium is added, the Cr content is limited to 1.0% or less. The Cr content is more preferably 0.8% or less. The Cr content is preferably 0.01% or more.

Nb: 0.080% or less

Niobium enhances cross tension strength and delayed fracture resistance after resistance spot welding by forming fine carbonitride. In order to obtain this effect, it is desirable to add 0.005% or more niobium. On the other hand, excessive addition of niobium significantly lowers elongation and also significantly deteriorates toughness. Thus, when niobium is added, the Nb content is limited to 0.080% or less. The Nb content is more preferably 0.070% or less, and further preferably 0.060% or less. The Nb content is preferably 0.005% or more, and more preferably 0.006% or more.

V: 0.50% or less

Vanadium is an element that can strengthen steel by controlling the microstructures through precipitation hardening. However, excessive addition of vanadium leads to deterioration in HAZ toughness. Thus, when vanadium is added, the V content is limited to 0.50% or less. The V content is more preferably 0.30% or less. The V content is preferably 0.005% or more, and more preferably 0.02% or more.

Ti: 0.20% or less

Titanium is an element that can strengthen steel by improving hardenability. However, titanium, when added in a large amount, forms carbide and the consequent precipitation hardening significantly deteriorates toughness. Thus, when titanium is added, the Ti content is limited to 0.20% or less. The Ti content is more preferably 0.15% or less. The Ti content is preferably 0.003% or more, and more preferably 0.004% or more.

B: 0.005% or less

Boron is an element that can strengthen steel by improving hardenability. Thus, when boron is added, the B content is preferably 0.0005% or more, and more preferably 0.0007% or more. However, excessive addition of boron saturates the above effect. Thus, when boron is added, the B content is limited to 0.005% or less. The B content is more preferably 0.0020% or less, and further preferably 0.0010% or less.

Al: 2.0% or less

Aluminum is an element that enables microstructure control for refining austenite grains, but excessive addition deteriorates toughness. Thus, when aluminum is added, the Al content is limited to 2.0% or less. The Al content is more preferably 1.5% or less, still more preferably 1.3% or less, and further preferably 1.2% or less. The Al content is preferably 0.01% or more.

Ca: 0.005% or less

Calcium is an element that can contribute to enhancing the workability of steel. However, excessive addition of calcium deteriorates toughness. Thus, when calcium is added, the Ca content is limited to 0.005% or less. The Ca content is more preferably 0.004% or less. The Ca content is preferably 0.001% or more.

The high-strength steel sheets with the above-described chemical composition preferably have a tensile strength of 780 MPa or more. The tensile strength of the high-strength steel sheets is more preferably 1180 MPa or more. As already mentioned, in particular, base materials having a tensile strength of 780 MPa or more come with a risk that fatigue strength and delayed fracture resistance may be lowered. According to the present invention, even high-strength steel sheets having a tensile strength of 780 MPa or more can benefit from a reduction in residual stress in a region from a nugget edge to sheet separation as a result of the specific region near the sheet separation being reduced in hardness, and welds are prevented from a decrease in fatigue strength and a decrease in delayed fracture resistance. Needless to mention, the above effects can be also obtained with high-strength steel sheets having a tensile strength of less than 780 MPa.

[Types of coatings on high-strength steel sheets]

The high-strength steel sheets of the present invention can attain the above-described effects even when the steel sheets have been galvanized and have a zinc coating layer on the steel sheet surface (namely, galvanized steel sheets). The zinc coating layer indicates a coating layer based on zinc as a main component. Examples of the zinc-based coating layers include hot-dip galvanized layers, electrogalvanized layers, Zn-Al coating layers, and Zn-Ni layers. The high-strength steel sheets of the present invention may be galvanized and then alloyed, that is, may be galvannealed steel sheets having a galvannealed layer on the base material surface.

In the present invention, the steel sheets that are overlapped may be steel sheets of the same type or may be steel sheets of different types. Overlapping may take place between a steel sheet having a zinc coating layer on the steel sheet surface (here, a galvanized steel sheet) and a steel sheet having no zinc coating layer on the steel sheet surface (here, a cold-rolled steel sheet). There is no problem if the thicknesses of the steel sheets are the same as or different from one another. In view of the fact that the target is general steel sheets for automobiles, the thickness of the steel sheets is preferably, for example, 0.4 mm to 2.2 mm.

[Resistance spot welding methods]

Next, an embodiment of a resistance spot welding method for producing the welded joint of the present invention having the weld described above will be described.

The welded joint of the present invention may be produced by resistance spot welding in which a sheet assembly that includes two or more overlapped steel sheets including at least one of the high-strength steel sheets described above is clamped between a pair of welding electrodes and is joined together by being pressed and energized through the pair of welding electrodes.

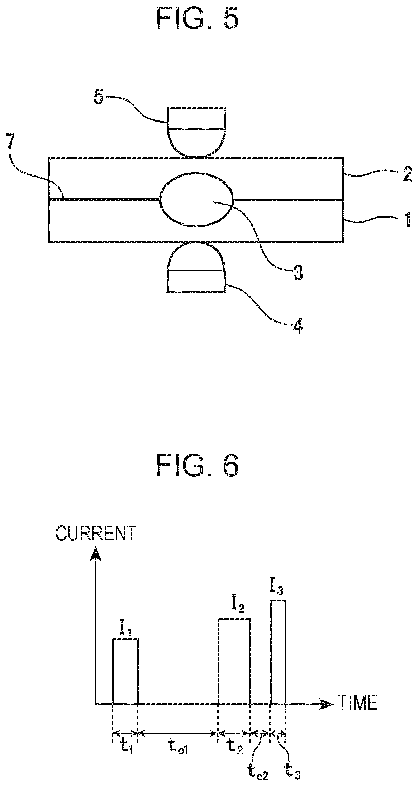

For example, as illustrated in Fig. 5, two steel sheets 1 and 2 are overlapped to form a sheet assembly. Next, the sheet assembly is clamped between a pair of welding electrodes 4 and 5 arranged on the lower and upper sides of the sheet assembly, and is energized while being pressed under control to the predetermined welding conditions. In this manner, the sheets are joined together through a steel sheet mating surface 7. A weld is thus produced (see Figs. 1 to 3). When a high-strength cold-rolled steel sheet and a high-strength galvanized steel sheet are overlapped into a sheet assembly, the overlapping of the steel sheets should make sure that the zinc-coated side of the high-strength galvanized steel sheet will be opposed to the high-strength cold-rolled steel sheet.

In the present invention, as illustrated in Fig. 6, the overlapped steel sheets 1 and 2 that have been clamped between the welding electrodes 4 and 5 are energized in a step that includes a main heating step and a tempering post-heat treatment step. The tempering post-heat treatment step includes a first cooling process, a first heating process, a second cooling process, and a second heating process. Each of these steps of the present invention will be described in detail below.

<Main heating step>

The main heating step is a step in which the steel sheet mating surface 7 of the steel sheets 1 and 2 is melted to form a nugget 3 with a desired size (see Fig. 5). In the main heating step, a nugget is formed by energization at a current $I_1$ (kA).

The nugget diameter adopted for resistance spot welds (welds) of automobile steel sheets is generally $3.0\sqrt{t_{sheet}}$ to $6.0\sqrt{t_{sheet}}$ (where $t_{sheet}$ (mm) is the sheet thickness). In the present invention, this numerical range is used as the "target nugget diameter (mm)". In the main heating step of the present invention, the energization conditions and the pressure conditions for forming the nugget 3 are not particularly limited as long as the nugget 3 that is obtained has the target nugget diameter.

The "$t_{sheet}$" in the above phrase "$t_{sheet}$ (mm) is the sheet thickness" indicates the thickness of the thinnest steel sheet among the steel sheets constituting the sheet assembly.

In order to ensure that a nugget 3 will be formed stably with the target nugget diameter at a steel sheet mating surface between overlapped steel sheets including the high-strength steel sheet of the present invention, it is preferable that the main heating step be performed under energization conditions and pressure conditions controlled as follows.

The current $I_1$ (kA) in the main heating step is preferably 3.0 kA to 8.0 kA. If the current $I_1$ is too low, the target nugget diameter cannot be obtained stably. If, on the other hand, the current $I_1$ is too high, the nugget diameter may be excessively large, or the steel sheets may be melted to such a high degree that the molten weld may be expelled as splash between the sheets, resulting in a small nugget diameter. For these reasons, the current $I_1$ is controlled to 3.0 kA to 8.0 kA.

The current $I_1$ is more preferably 3.5 kA or more. The current $I_1$ is more preferably 7.5 kA or less.

The current passing time $t_1$ (ms) in the main heating step is preferably 120 ms to 400 ms. Similar to the current $I_1$, this time setting allows a nugget 3 to be stably formed with the target nugget diameter. If the current passing time $t_1$ is less than 120 ms, there is a concern that the nugget will not be formed sufficiently. If, on the other hand, the current passing time $t_1$ is more than 400 ms, there is a risk that the nugget that is formed may have a diameter larger than the target nugget diameter and workability may be lowered. The current passing time $t_1$ is preferably 200 ms or more. The current passing time $t_1$ is preferably 300 ms or less. As long as the desired nugget diameter is obtained, the current passing time $t_1$ may be set shorter or longer than the numerical range described above.

The pressure conditions in the main heating step are preferably such that the electrode force is set to 2.0 kN to 7.0 kN. If the electrode force is too high, the energizing diameter is increased to tend to make it difficult to ensure the nugget diameter. If, on the other hand, the electrode force is too low, the energizing diameter is small and splash occurs easily. For these reasons, the electrode force is controlled to 2.0 kN to 7.0 kN. The electrode force is more preferably 3.0 kN or more, and is more preferably 6.5 kN or less. The electrode force may be limited depending on the capacity of the equipment used. As long as the electrode force is sufficient to obtain the desired nugget diameter, the electrode force may be set lower or higher than the numerical range described above.

<Tempering post-heat treatment step>

The tempering post-heat treatment step is a post-heat treatment step in which the first region of the weld formed in the main heating step is tempered to reduce the residual stress responsible for delayed fracture. In this step, specifically, the weld is tempered effectively so that the microstructures in the first region will be transformed into tempered martensite by tempering. In the tempering post-heat treatment step, the weld from the main heating step is subjected to a first cooling process, a first heating process, a second cooling process, and a second heating process in this order. In order to reduce the residual stress in a region from the nugget edge to the sheet separation by tempering of the first region, it is important that the processes in the tempering post-heat treatment step be performed under welding conditions controlled as follows.

[First cooling process]

After the main heating step, the weld is cooled to a temperature at which the nugget edge undergoes martensitic transformation. This process is defined as the first cooling process. In order to sufficiently obtain the effects of tempering described later, this first cooling process cools the weld by maintaining a non-energized state for a cooling time $t_{c1}$ (ms) shown in expression (3):

$$800 \leq t_{c1} \quad \cdots (3)$$

If the cooling time $t_{c1}$ (ms) in the first cooling process is less than 800 ms, martensitic transformation does not occur sufficiently, and the non-occurrence of martensite leaves austenite in the microstructures. As a result, austenite remains during the subsequent processes (specifically, the first heating process, the second cooling process, and the second heating process) and is ultimately transformed into martensitic microstructures (namely, as-quenched martensitic microstructures). As a result, the first region is composed of brittle microstructures and fails to attain enhancements in delayed fracture resistance. Thus, the cooling time $t_{c1}$ (ms) is limited to 800 ms or more. The cooling time $t_{c1}$ is preferably 850 ms or more, more preferably 900 ms or more, and still more preferably 1000 ms or more. In the first cooling process, sufficient martensitic transformation is effected at or below the Ms temperature in order to ensure that more carbide will be formed in the subsequent heating process and the average number density of the carbide will be increased.

The upper limit of the cooling time $t_{c1}$ (ms) in the first cooling process is not particularly limited. Because the steel sheets of interest in the present invention are steel sheets for automobiles, an extension in welding time lowers the working efficiency. Thus, the cooling time $t_{c1}$ (ms) is preferably 2200 ms or less, and more preferably 2000 ms or less.

[First heating process]

The first cooling process is followed by a first heating process. In the first heating process, the weld is heated by energization (post-energization) to an appropriate range of temperatures for tempering the martensitic microstructures formed by the previous cooling process. The "appropriate range of temperatures" indicates tempering temperatures for softening the hardness of the first region.

Specifically, the first heating process energizes the weld at a current $I_2$ (kA) shown in expression (4) for a current passing time $t_2$ (ms) shown in expression (5):

$$1.01 \times I_1 \leq I_2 \leq 1.4 \times I_1 \quad \cdots (4)$$

$$100 < t_2 \leq 500 \quad \cdots (5)$$

Tempering energization is usually aimed at tempering the vicinity of a nugget edge and is therefore performed at a lower current than the main energization. In the present invention, however, post-energization is performed at a high temperature in order to ensure that the first region remote from the nugget will be tempered. Here, it is particularly important that the temperature be raised rapidly in a short time to an appropriate temperature for tempering the first region, specifically, to a temperature equal to or higher than the $Ac_1$ temperature. In this manner, the microstructures in the first region can be effectively tempered into tempered martensite.

If the current $I_2$ in this process is too low, the tempering effects are weakened. If, on the other hand, the current $I_2$ in this process is too high, the temperature will exceed the $Ac_3$ temperature and the microstructures of the nugget edge cannot be controlled to tempered martensite. In other cases, such a high current may give rise to splash and the molten metal may be expelled to cause a failure to obtain the desired nugget diameter.

For the above reasons, the current $I_2$ (kA) in the first heating process should satisfy the relationship of expression (4). If the current $I_2$ in the first heating process is less than $(1.01 \times I_1)$ (kA), the temperature will be below the $Ac_1$ temperature and the nugget edge cannot be tempered effectively. The current $I_2$ is preferably $(1.12 \times I_1)$ (kA) or more.

If, on the other hand, the current $I_2$ in the first heating process is more than $(1.4 \times I_1)$ (kA), the temperature is highly likely to exceed the $Ac_3$ temperature and the microstructures will be transformed again into austenite in the subsequent process and will ultimately become martensitic microstructures, causing embrittlement. As a result, the toughness of the nugget edge cannot be obtained. The current $I_2$ is preferably $(1.35 \times I_1)$ (kA) or less.

As described above, the first heating process increases the temperature rapidly in a short time. Thus, the current passing time $t_2$ (ms) in the first heating process should satisfy expression (5). The current passing time $t_2$ is preferably 120 ms or more. The current passing time $t_2$ is preferably 400 ms or less.

Post-heating in the appropriate temperature range described above promotes tempering and allows the average number density of carbide to be increased, resulting in low hardness. As a result, the hardness ratio relative to a nugget central portion is also reduced.

[Second cooling process]

The first heating process is followed by a second cooling process.

The first region includes tempered martensitic microstructures as a result of heating in the first heating process described above. However, the tempering time in this first heating process alone is short and austenite remains in part of the microstructures in the first region. If this is avoided by continuing the post-heating for an extended time or performing the post-energization without a cooling process, there is a high probability that splash will occur during the post-energization. Thus, the present invention provides, after the first heating process, a second cooling process to temporarily lower the temperature of the weld.

Specifically, the second cooling process performs cooling by maintaining a non-energized state for a cooling time $t_{c2}$ (ms) shown in expression (6):

$$0 < t_{c2} \leq 300 \quad \cdots (6)$$

The second cooling process aims to temporarily lower the temperature of the weld slightly. For this purpose, the current passing time $t_{c2}$ is limited to more than 0 ms and 300 ms or less. In order to avoid the occurrence of splash and to effectively perform tempering, the cooling time $t_{c2}$ in the second cooling process is preferably 20 ms or more. The cooling time $t_{c2}$ is preferably 250 ms or less, and more preferably 200 ms or less.

[Second heating process]

In order to control the temperature appropriately to allow the first region to be tempered more effectively, a second heating process is performed after the second cooling process. Specifically, the second heating process energizes the weld at a current $I_3$ (kA) shown in expression (7) for a current passing time $t_3$ (ms) shown in expression (8):

$$I_2 < I_3 \leq 1.5 \times I_2 \quad \cdots (7)$$

$$0 < t_3 < 500 \quad \cdots (8)$$

The current $I_3$ (kA) in the second heating process needs to be higher than the current $I_2$ (kA) in the first heating process. If the current $I_3$ in the second heating process is equal to or lower than the current $I_2$ (kA) in the first heating process, the tempering temperature is excessively low and may fail to promote tempering of the first region. As a result, the first region may remain as hard microstructures and an increased amount of residual stress may remain. The current $I_3$ in the second heating process is preferably $(1.1 \times I_2)$ (kA) or more.

If, on the other hand, the current in the second heating process is excessively high, splash may occur or the microstructures in the first region may be hardened by retransformation of tempered martensite into martensite. For these reasons, the current $I_3$ in the second heating process is limited to $(1.5 \times I_2)$ (kA) or less. The current $I_3$ is preferably $(1.45 \times I_2)$ (kA) or less, and more preferably $(1.40 \times I_2)$ (kA) or less.

The current passing time $t_3$ in the second heating process should satisfy expression (8) in order to maintain the temperature at the tempering temperature reached in the first heating process. The current passing time $t_3$ is preferably 40 ms or more, and more preferably 80 ms or more. The current passing time $t_2$ is preferably 250 ms or less.

In the present invention, the tempering post-heat treatment step is divided into two stages: a stage including the first cooling process and the first heating process, and a stage including the second cooling process and the second heating process. These processes that are controlled as described above eliminate the need to provide additional steps after the tempering post-heat treatment step.

As described above, the resistance spot welding method of the present invention involves appropriate control of the welding conditions in the tempering post-heat treatment step and thereby ensures that the first region near the sheet separation will be tempered martensite and the residual stress from the nugget edge to the sheet separation will be lowered. That is, a welded joint obtained by this welding method can be enhanced in delayed fracture resistance and further in fatigue strength by virtue of the reduction of residual stress.

EXAMPLES

Hereinbelow, the functions and effects of the present invention will be described based on Examples. It should be noted that the present invention is not limited to the following Examples.

The test specimens that were used were steel sheets described in Tables 1 and 2 (steel sheets A to L) that had a tensile strength of 780 MPa to 1800 MPa and a thickness of 0.8 to 1.2 mm. The size of the test specimens was 100 mm in long side and 30 mm in short side. Table 1 describes the chemical compositions of the steel sheets A to L. The hyphen **"-"** in Table 1 indicates that the element was not added purposefully and means not only that the element was absent (0%) but also that the element was present as an incidental impurity. "GA steel sheet" in Table 2 indicates that the steel sheet was the galvannealed steel sheet described hereinabove.

First, the test specimens obtained were overlapped as described in Table 2 to form sheet assemblies. In Table 2, "Steel sheet overlapping positions" were counted "First" and "Second" from the bottom steel sheet upwards. Next, the sheet assemblies were each resistance spot welded under the welding conditions described in Table 3 to form a nugget 3 with the desired size between the sheets. Resistance spot welded joints were thus produced. Part of the sheet assemblies involved three steel sheets that were overlapped. The hyphen **"-"** in Table 3 indicates that the process was not performed.

In this Example, as illustrated in Fig. 5, the sheet assembly including the overlapped steel sheets (the lower steel sheet 1 and the upper steel sheet 2 in the example illustrated in Fig. 5) was resistance spot welded using a resistance welding machine of servomotor pressing type that was attached to a C-gun and had a DC power source.

Other welding conditions were as follows. The electrode force applied during energization was constant at 3.5 kN. The welding electrode 4 and the welding electrode 5 under and on the sheet assembly were DR-type chromium copper electrodes having a tip diameter of 6 mm and a tip radius of curvature of 40 mm. Welding was performed using the DC power source while controlling the electrode force through the lower welding electrode 4 and the upper welding electrode 5. A nugget was formed so that the nugget diameter would be $5.5\sqrt{t_{sheet}}$ (mm) or less where $t_{sheet}$ (mm) is the sheet thickness.

For evaluation, the resistance spot welded joints (the welded joints) obtained were subjected to a delayed fracture test and a fatigue strength test in the manner described below. Furthermore, the welds were evaluated, and the hardness of the first regions, the size of carbide particles in the first region, and the average number density of the carbide were assessed or measured in the manner described below.

[Evaluation of delayed fracture resistance]

The delayed fracture resistance was evaluated as follows. The welded joints produced were checked for the presence or absence of delayed fracture after 24 hours in air. The occurrence of delayed fracture was defined as a phenomenon in which the nugget was cracked in half at the joint interface of the weld.

The welded joints that had been allowed to stand for 24 hours were marked with "$\times$" when delayed fracture had occurred and were marked with "o" when delayed fracture was absent. In this Example, the delayed fracture resistance was evaluated as good when the rating was "o" and as poor when the rating was "×". The measurement results are described in Table 4.

[Evaluation of fatigue strength]

The fatigue strength was evaluated based on the fatigue strength test of JIS Z3138. Specifically, the welded joint prepared was cut to give a test specimen for tensile shear fatigue testing that had a shape specified in JIS Z3138, and a 2 kN load was repeatedly applied to the shear tensile test specimen. The number of times the load was applied until fracture occurred was counted.

For comparison, the sheet assembly was resistance spot welded under the main weld heating conditions alone to give a comparative welded joint. The comparative welded joint was subjected to the same fatigue strength test as described above, and the number of load applications until the shear tensile test specimen was fractured (hereinafter, written as the "comparative repetition count") was determined.

The count obtained was compared to the comparative repetition count. The test specimen was marked with "×" when the ratio of the count to the comparative repetition count was less than 1.2 and was marked with "o" when the ratio was 1.2 or more.

In this Example, the fatigue strength was evaluated as good when the rating was "o" and as poor when the rating was "×". The measurement results are described in Table 4.

[Evaluation of the welds]

In this Example, the welds of the welded joints were evaluated based on the evaluations of delayed fracture resistance and fatigue strength described above. In Table 4, the welds were evaluated as "○ (acceptable)" when the ratings of delayed fracture resistance and fatigue strength were both "○".

On the other hand, the welds were evaluated as "× (fail)" when either one of delayed fracture resistance and fatigue strength was rated as "×" or when both delayed fracture resistance and fatigue strength were rated as "×".

[Assessment of the hardness of the first region]

The hardness at the nugget center and that of the first region were measured as follows.

The welded joint prepared was cut across the center of the circular nugget to give a test specimen. The test specimen was ultrasonically cleaned and was embedded in a resin. A through-thickness cross section of the sample was polished and was etched using a picric acid solution. A sample was thus prepared. The hardness was measured using a Vickers hardness tester by the method specified in JIS Z2244. The measurement load was applied with a 300 gf indenter for 15 seconds.

Specifically, the Vickers hardness is measured in the following manner. The measurement starts from the top left of the first region as number 1 and shifts to the right at 0.2 mm intervals until the indenter reaches the right end of the first region. The measurement then goes to a position 0.2 mm below number 1. This procedure is repeated until the bottom right of the first region is measured. The results are averaged to give the average hardness of the first region. Here, the high-strength steel sheet having the lowest strength (namely, the lowest tensile strength) of the overlapped steel sheets was used as the evaluation steel sheet.

The results described in "Hardness assessment" column in Table 4 show whether or not the first region satisfied a hardness ratio (Hv/Hvm) of less than 0.85. The symbol "o" indicates a pass (namely, Hv/Hvm was less than 0.85) and the symbol "×" indicates a fail (namely, Hv/Hvm was 0.85 or more).

[Size and average number density of carbide particles in the first region]

Referring to Fig. 1, the steel sheet microstructures in the first region were observed. The region was cut out from the resistance spot welded workpiece obtained. A through-thickness cross section of the region was polished, etched with 3% Nital, and observed with TEM (transmission electron microscope) at a magnification of 10000 times. Furthermore, the grain size of cementite was determined by calculating the equivalent circle diameters of cementite using Image-Pro while setting the lower limit to 0.005 $\mu$m.

To determine the average number density (particles/5 $\mu m^2$) of cementite particles having a size of 100 nm or more, the steel sheet was observed with TEM (transmission electron microscope) at a magnification of 10000 times and the number density per 5 $\mu m^2$ of a steel sheet cross section was calculated with respect to five locations. The values obtained were averaged to give the average number density of carbide particles having a size of 100 nm or more per 5 $\mu m^2$ of a steel sheet cross section. The average number density is described in Table 4. If the size of carbide particles is larger, there is a possibility that the particles are precipitates other than carbide that have been generated by tempering. Thus, the size of carbide particles was limited to 500 nm or less. Here, the high-strength steel sheet having the lowest strength (namely, the lowest tensile strength) of the overlapped steel sheets was used as the evaluation steel sheet.

The above observation was made in the order illustrated in Fig. 4. The average number density (number of particles/5 $\mu m^2$) of carbide should be satisfied at one or more sites within the range of distance L illustrated in Fig. 4 (that is, within the first region). For example, as illustrated in Fig. 4, the first region was divided into a grid pattern, and the upper left of the first region was designated as number 1. The observation started from the position indicated by "1" and was continued while shifting the observation position until the observation result satisfied the average number density (namely, until an acceptable observation result was obtained). In the first observation, the average number density was determined at a site remote from the position of point 1 by (0.2 × L) mm toward the base material zone (here, the direction to the right of the paper in Fig. 4). If the observation result did not satisfy the average number density (namely, the observation result was unacceptable), the second observation was made at the position indicated by "2". Similarly in the second observation, the average number density was determined at a site remote from the position of point 2 by (0.2 × L) mm toward the base material zone. This procedure was repeated from one to another until the observation result "passed" the criterion.

[Table 1]

Chemical composition (mass%)

| Steel sheet | C | Si | Mn | P | S | N | O | Cu | Ni | Mo | Cr | Nb | V | Ti | B | Al | Ca | Remarks |
|---|---|---|---|---|---|---|---|---|---|---|---|---|---|---|---|---|---|---|
| A | 0.20 | 1.3 | 3.0 | 0.01 | 0.001 | 0.003 | 0.005 | 0.010 | 0.15 | 0.010 | 0.20 | 0.008 | 0.006 | 0.005 | 0.0006 | 0.02 | 0.002 | Steel sheet A |
| B | 0.10 | 0.2 | 4.0 | 0.01 | 0.001 | 0.002 | 0.005 | 0.010 | 0.15 | 0.010 | 0.40 | 0.008 | 0.006 | 0.005 | 0.0006 | 0.02 | 0.002 | Steel sheet B |
| C | 0.20 | 1.1 | 2.0 | 0.01 | 0.002 | 0.002 | 0.010 | 0.010 | 0.15 | 0.010 | 0.20 | 0.008 | 0.050 | 0.010 | 0.0006 | 0.02 | 0.005 | Steel sheet C |
| D | 0.13 | 0.9 | 3.5 | 0.01 | 0.001 | 0.005 | 0.005 | 0.200 | 0.30 | 0.010 | 0.20 | 0.008 | 0.006 | 0.005 | 0.0006 | 0.03 | 0.002 | Steel sheet D |
| E | 0.50 | 0.5 | 1.5 | 0.03 | 0.001 | 0.002 | 0.005 | 0.050 | 0.15 | 0.010 | 0.20 | 0.008 | 0.006 | 0.005 | 0.0006 | 0.02 | 0.002 | Steel sheet E |
| F | 0.30 | 1.5 | 2.5 | 0.01 | 0.001 | 0.003 | 0.005 | 0.010 | 0.15 | 0.010 | 0.20 | 0.008 | 0.006 | 0.030 | 0.0020 | 0.02 | 0.002 | Steel sheet F |
| G | 0.56 | 0.3 | 1.5 | 0.01 | 0.001 | 0.002 | 0.005 | 0.050 | 0.15 | 0.200 | 0.20 | 0.008 | 0.006 | 0.005 | 0.0006 | 0.02 | 0.002 | Steel sheet G |
| H | 0.40 | 1.2 | 2.0 | 0.01 | 0.001 | 0.002 | 0.005 | 0.010 | 0.15 | 0.010 | 0.20 | 0.050 | 0.006 | 0.005 | 0.0006 | 0.02 | 0.002 | Steel sheet H |
| I | 0.65 | 2.0 | 1.5 | 0.01 | 0.001 | 0.002 | 0.005 | 0.010 | 0.15 | 0.010 | 0.20 | 0.008 | 0.006 | 0.005 | 0.0006 | 0.02 | 0.002 | Comp. steel I |
| J | 0.40 | 0.5 | 5.0 | 0.01 | 0.001 | 0.002 | 0.005 | 0.010 | 0.15 | 0.010 | 0.20 | 0.008 | 0.006 | 0.005 | 0.0006 | 0.02 | 0.002 | Comp. steel J |
| K | 0.20 | 1.1 | 2.1 | 0.01 | 0.002 | 0.002 | 0.005 | - | - | - | - | - | - | - | - | - | - | Steel sheet K |
| L | 0.30 | 1.5 | 2.1 | 0.01 | 0.001 | 0.002 | 0.005 | - | - | - | - | - | - | - | - | - | - | Steel sheet L |

[Table 2]

| Sheet assembly | Steel sheet overlapping positions | Steel sheets | Steel sheet types | Tensile strength (MPa) | Steel sheet thickness (mm) |
|---|---|---|---|---|---|
| a | First | Cold-rolled steel sheet | Steel sheet A | 1180 | 1.2 |
| a | Second | Cold-rolled steel sheet | Steel sheet A | 1180 | 1.2 |
| b | First | Cold-rolled steel sheet | Steel sheet B | 1180 | 1.2 |
| b | Second | Cold-rolled steel sheet | Steel sheet B | 1180 | 1.2 |
| c | First | Cold-rolled steel sheet | Steel sheet A | 1180 | 1.2 |
| c | Second | Cold-rolled steel sheet | Steel sheet B | 1180 | 1.2 |
| d | First | Cold-rolled steel sheet | Steel sheet A | 1180 | 1.2 |
| d | Second | Cold-rolled steel sheet | Steel sheet C | 980 | 1.2 |
| e | First | Cold-rolled steel sheet | Steel sheet A | 1180 | 1.2 |
| e | Second | Cold-rolled steel sheet | Steel sheet D | 780 | 1.2 |
| f | First | Cold-rolled steel sheet | Steel sheet E | 1470 | 1.2 |
| f | Second | Cold-rolled steel sheet | Steel sheet E | 1470 | 1.2 |
| g | First | Cold-rolled steel sheet | Steel sheet F | 1470 | 1.2 |
| g | Second | Cold-rolled steel sheet | Steel sheet F | 1470 | 1.2 |
| h | First | Cold-rolled steel sheet | Steel sheet G | 1470 | 1.2 |
| h | Second | Cold-rolled steel sheet | Steel sheet G | 1470 | 1.2 |
| i | First | Cold-rolled steel sheet | Steel sheet H | 1800 | 1.2 |
| i | Second | Cold-rolled steel sheet | Steel sheet H | 1800 | 1.2 |
| j | First | Cold-rolled steel sheet | Comp. steel I | 1470 | 1.2 |
| j | Second | Cold-rolled steel sheet | Comp. steel I | 1470 | 1.2 |
| k | First | Cold-rolled steel sheet | Steel sheet B | 1180 | 1.2 |
| k | Second | Cold-rolled steel sheet | Comp. steel I | 1470 | 1.2 |
| l | First | Cold-rolled steel sheet | Steel sheet C | 1180 | 1.2 |
| l | Second | Cold-rolled steel sheet | Comp. steel J | 1470 | 1.2 |
| m | First | Cold-rolled steel sheet | Steel sheet A | 1180 | 0.8 |
| m | Second | Cold-rolled steel sheet | Steel sheet A | 1180 | 0.8 |
| m | Third | Cold-rolled steel sheet | Steel sheet A | 1180 | 0.8 |
| n | First | GA steel sheet | Steel sheet A | 1180 | 1.2 |
| n | Second | GA steel sheet | Steel sheet A | 1180 | 1.2 |
| o | First | GA steel sheet | Steel sheet A | 1180 | 1.2 |
| o | Second | GA steel sheet | Steel sheet C | 1180 | 1.2 |
| p | First | GA steel sheet | Steel sheet A | 1180 | 1.2 |
| p | Second | GA steel sheet | Steel sheet D | 1180 | 1.2 |
| q | First | GA steel sheet | Steel sheet F | 1470 | 1.2 |
| q | Second | GA steel sheet | Steel sheet F | 1470 | 1.2 |
| r | First | Cold-rolled steel sheet | Steel sheet K | 1180 | 1.0 |
| r | Second | Cold-rolled steel sheet | Steel sheet L | 1470 | 1.2 |

[Table 3]

| Weldin g No. | Sheet assembly | Main heating step | | Tempering post-heat treatment step | | | | | | Remarks |
| | | Current $I_1$ (kA) | Current passing time $t_1$ (ms) | First cooling process | First heating process | | Second cooling process | Second heating process | | |
| | | | | Cooling time $t_{c1}$ (ms) | Current $I_2$ (kA) | Current passing time $t_2$ (ms) | Cooling time $t_{c2}$ (ms) | Curren t $I_3$ (kA) | Current passing time $t_3$ (ms) | |
| 1 | a | 6.5 | 280 | - | - | - | - | - | - | Comp. Ex. |
| 2 | a | 6.5 | 280 | 800 | 7.0 | 140 | 200 | 7.5 | 150 | Inv. Ex. |
| 3 | a | 6.5 | 280 | 800 | 7.8 | 240 | 200 | 11.5 | 200 | Inv. Ex. |
| 4 | b | 6.5 | 280 | 1200 | 7.0 | 120 | 50 | 7.2 | 600 | Comp. Ex. |
| 5 | b | 6.5 | 280 | 1500 | 6.8 | 450 | 250 | 7.0 | 100 | Inv. Ex. |
| 6 | c | 6.5 | 250 | 1200 | 8.5 | 120 | 100 | 8.8 | 50 | Inv. Ex. |
| 7 | c | 6.5 | 250 | 820 | 6.8 | 180 | 150 | 9.8 | 100 | Inv. Ex. |
| 8 | d | 6.5 | 250 | 900 | 8.0 | 140 | 100 | 8.5 | 400 | Inv. Ex. |
| 9 | d | 6.7 | 250 | 1000 | 9.0 | 200 | 20 | 10.0 | 600 | Comp. Ex. |
| 10 | e | 6.7 | 280 | 900 | 8.0 | 120 | 200 | 12.5 | 100 | Comp. Ex. |
| 11 | e | 6.5 | 280 | 1000 | 7.0 | 120 | 100 | 7.5 | 450 | Inv. Ex. |
| 12 | f | 8.0 | 280 | 1600 | 8.5 | 250 | 100 | 8.8 | 100 | Inv. Ex. |
| 13 | f | 6.5 | 280 | 800 | 7.0 | 600 | 40 | 8.0 | 300 | Comp. Ex. |
| 14 | g | 6.5 | 280 | 1000 | 7.8 | 160 | 40 | 8.5 | 150 | Inv. Ex. |
| 15 | g | 6.7 | 300 | 1400 | 8.0 | 120 | 40 | 8.8 | 200 | Inv. Ex. |
| 16 | g | 6.5 | 280 | 1000 | 9.0 | 120 | 20 | 8.0 | 400 | Comp. Ex. |
| 17 | g | 6.5 | 280 | 1000 | 6.9 | 140 | 60 | 7.5 | 100 | Inv. Ex. |
| 18 | h | 6.5 | 280 | 1500 | 6.3 | 200 | 80 | 8.0 | 200 | Comp. Ex. |
| 19 | h | 6.5 | 280 | 1800 | 7.8 | 200 | 50 | 8.2 | 100 | Inv. Ex. |
| 20 | i | 6.5 | 280 | 1900 | 9.0 | 80 | 80 | 10.0 | 100 | Comp. Ex. |
| 21 | i | 6.5 | 280 | 1700 | 7.5 | 160 | 40 | 7.8 | 150 | Inv. Ex. |
| 22 | j | 6.5 | 280 | 1000 | 8.0 | 150 | 200 | 8.5 | 200 | Comp. Ex. |
| 23 | k | 6.5 | 280 | 1000 | 9.5 | 150 | 200 | 8.5 | 300 | Comp. Ex. |
| 24 | k | 6.5 | 280 | 2000 | 8.0 | 160 | 80 | 8.5 | 100 | Inv. Ex. |
| 25 | k | 6.5 | 280 | 1000 | 7.5 | 120 | 40 | 8.0 | 150 | Inv. Ex. |
| 26 | l | 6.3 | 300 | 500 | 8.0 | 300 | 40 | 8.5 | 100 | Comp. Ex. |

(continued)

| Welding No. | Sheet assembly | Main heating step | | Tempering post-heat treatment step | | | | | | Remarks |
| | | Current $I_1$ (kA) | Current passing time $t_1$ (ms) | First cooling process | First heating process | | Second cooling process | Second heating process | | |
| | | | | Cooling time $t_{c1}$ (ms) | Current $I_2$ (kA) | Current passing time $t_2$ (ms) | Cooling time $t_{c2}$ (ms) | Current $I_3$ (kA) | Current passing time $t_3$ (ms) | |
|---|---|---|---|---|---|---|---|---|---|---|
| 27 | l | 6.5 | 280 | 1800 | 7.0 | 140 | 20 | 7.5 | 200 | Inv. Ex. |
| 28 | m | 6.5 | 280 | 1400 | 7.2 | 200 | 40 | 7.9 | 250 | Inv. Ex. |
| 29 | m | 6.5 | 280 | 1800 | 8.0 | 140 | 100 | 8.2 | 100 | Inv. Ex. |
| 30 | n | 3.0 | 400 | 1800 | 4.2 | 120 | 280 | 5.8 | 200 | Inv. Ex. |
| 32 | n | 6.5 | 280 | 900 | 8.0 | 200 | 100 | 7.5 | 200 | Comp. Ex. |
| 33 | o | 6.5 | 280 | 2000 | 8.5 | 150 | 100 | 9.0 | 50 | Inv. Ex. |
| 34 | o | 6.5 | 280 | 1000 | 9.0 | 200 | 100 | 14.0 | 150 | Comp. Ex. |
| 35 | p | 6.5 | 280 | 900 | 8.1 | 200 | 200 | 8.5 | 150 | Inv. Ex. |
| 36 | p | 6.5 | 280 | 800 | 8.0 | 300 | 100 | 8.5 | 300 | Inv. Ex. |
| 38 | q | 6.5 | 280 | 1000 | 8.8 | 250 | 500 | 9.0 | 200 | Comp. Ex. |
| 39 | q | 6.5 | 280 | 1800 | 8.0 | 120 | 40 | 8.5 | 200 | Inv. Ex. |
| 40 | r | 8.0 | 280 | 2000 | 8.8 | 150 | 100 | 9.0 | 100 | Inv. Ex. |
| 41 | r | 6.5 | 280 | 2000 | 8.5 | 150 | 100 | 9.0 | 80 | Inv. Ex. |

[Table 4]

| Welding No. | Sheet assembly | Resistance spot weld | | | | | | | Evaluation results | | | Remarks |
|---|---|---|---|---|---|---|---|---|---|---|---|---|
| | | Evaluation steel sheet | Sheet thickness t (mm) | Hardness of nugget central portion Hvm | Average hardness of first region Hv | Hardness ratio [*1] | Assessment of hardness | Average number density of carbide (number of particles/ $5\mu m^2$) | Assessment of delayed fracture resistance | Assessment of fatigue strength | Evaluation of weld | |
| 1 | a | A | 1.2 | 514 | 501 | 0.97 | × | 0 | × | × | × | Comp. Ex. |
| 2 | a | A | 1.2 | 499 | 389 | 0.78 | ○ | 36 | ○ | ○ | ○ | Inv. Ex. |
| 3 | a | A | 1.2 | 485 | 400 | 0.82 | ○ | 28 | ○ | ○ | ○ | Inv. Ex. |
| 4 | b | B | 1.2 | 435 | 420 | 0.97 | × | 0 | × | × | × | Comp. Ex. |
| 5 | b | B | 1.2 | 419 | 296 | 0.71 | ○ | 104 | ○ | ○ | ○ | Inv. Ex. |
| 6 | c | B | 1.2 | 474 | 381 | 0.80 | ○ | 42 | ○ | ○ | ○ | Inv. Ex. |
| 7 | c | B | 1.2 | 491 | 391 | 0.80 | ○ | 47 | ○ | ○ | ○ | Inv. Ex. |
| 8 | d | C | 1.2 | 486 | 332 | 0.68 | ○ | 72 | ○ | ○ | ○ | Inv. Ex. |
| 9 | d | C | 1.2 | 502 | 512 | 1.02 | × | 0 | × | × | × | Comp. Ex. |
| 10 | e | D | 1.2 | 475 | 411 | 0.87 | × | 2 | × | × | × | Comp. Ex. |
| 11 | e | D | 1.2 | 483 | 311 | 0.64 | ○ | 160 | ○ | ○ | ○ | Inv. Ex. |
| 12 | f | E | 1.2 | 735 | 588 | 0.80 | ○ | 38 | ○ | ○ | ○ | Inv. Ex. |
| 13 | f | E | 1.2 | 786 | 771 | 0.98 | × | 0 | × | × | × | Comp. Ex. |
| 14 | g | F | 1.2 | 545 | 405 | 0.74 | ○ | 81 | ○ | ○ | ○ | Inv. Ex. |
| 15 | g | F | 1.2 | 587 | 408 | 0.70 | ○ | 95 | ○ | ○ | ○ | Inv. Ex. |
| 16 | g | F | 1.2 | 602 | 613 | 1.02 | × | 0 | × | × | × | Comp. Ex. |

(continued)

| Welding No. | Sheet assembly | Resistance spot weld | | | | | | | Evaluation results | | | Remarks |
| | | Evaluation steel sheet | Sheet thickness t (mm) | Hardness of nugget central portion Hvm | Average hardness of first region Hv | Hardness ratio [*1] | Assessment of hardness | Average number density of carbide (number of particles/ $5\mu m^2$) | Assessment of delayed fracture resistance | Assessment of fatigue strength | Evaluation of weld | |
|---|---|---|---|---|---|---|---|---|---|---|---|---|
| 17 | g | F | 1.2 | 592 | 453 | 0.77 | ○ | 78 | ○ | ○ | ○ | Inv. Ex. |
| 18 | h | G | 1.2 | 800 | 798 | 1.00 | × | 0 | × | × | × | Comp. Ex. |
| 19 | h | G | 1.2 | 791 | 634 | 0.80 | ○ | 55 | ○ | ○ | ○ | Inv. Ex. |
| 20 | i | H | 1.2 | 701 | 711 | 1.01 | × | 0 | × | × | × | Comp. Ex. |
| 21 | i | H | 1.2 | 675 | 480 | 0.71 | ○ | 78 | ○ | ○ | ○ | Inv. Ex. |
| 22 | j | I | 1.2 | 822 | 815 | 0.99 | × | 0 | × | × | × | Comp. Ex. |
| 23 | k | B | 1.2 | 700 | 712 | 1.02 | × | 0 | × | × | × | Comp. Ex. |
| 24 | k | B | 1.2 | 645 | 524 | 0.81 | ○ | 22 | ○ | ○ | ○ | Inv. Ex. |
| 25 | k | B | 1.2 | 665 | 440 | 0.66 | ○ | 98 | ○ | ○ | ○ | Inv. Ex. |
| 26 | l | C | 1.2 | 601 | 582 | 0.97 | × | 0 | × | × | × | Comp. Ex. |
| 27 | l | C | 1.2 | 579 | 360 | 0.62 | ○ | 78 | ○ | ○ | ○ | Inv. Ex. |
| 28 | m | A | 0.8 | 503 | 375 | 0.75 | ○ | 75 | ○ | ○ | ○ | Inv. Ex. |
| 29 | m | A | 0.8 | 506 | 354 | 0.70 | ○ | 91 | ○ | ○ | ○ | Inv. Ex. |
| 30 | n | A | 1.2 | 508 | 398 | 0.78 | ○ | 68 | ○ | ○ | ○ | Inv. Ex. |
| 32 | n | A | 1.2 | 500 | 388 | 0.78 | ○ | 0 | × | × | × | Comp. Ex. |
| 33 | o | A | 1.2 | 445 | 302 | 0.68 | ○ | 67 | ○ | ○ | ○ | Inv. Ex. |

(continued)

| Welding No. | Sheet assembly | Resistance spot weld | | | | | | | Evaluation results | | | Remarks |
|---|---|---|---|---|---|---|---|---|---|---|---|---|
| | | Evaluation steel sheet | Sheet thickness t (mm) | Hardness of nugget central portion Hvm | Average hardness of first region Hv | Hardness ratio [*1] | Assessment of hardness | Average number density of carbide (number of particles/ $5\mu m^2$) | Assessment of delayed fracture resistance | Assessment of fatigue strength | Evaluation of weld | |
| 34 | o | A | 1.2 | 492 | 448 | 0.91 | × | 5 | × | × | × | Comp. Ex. |
| 35 | p | A | 1.2 | 528 | 440 | 0.83 | ○ | 55 | ○ | ○ | ○ | Inv. Ex. |
| 36 | p | A | 1.2 | 519 | 433 | 0.83 | ○ | 12 | ○ | ○ | ○ | Inv. Ex. |
| 38 | q | F | 1.2 | 621 | 543 | 0.87 | × | 0 | × | × | × | Comp. Ex. |
| 39 | q | F | 1.2 | 618 | 500 | 0.81 | ○ | 55 | ○ | ○ | ○ | Inv. Ex. |
| 40 | r | K | 1.0 | 445 | 302 | 0.68 | ○ | 67 | ○ | ○ | ○ | Inv. Ex. |
| 41 | r | K | 1.0 | 445 | 302 | 0.68 | ○ | 67 | ○ | ○ | ○ | Inv. Ex. |

*1.Hardness ratio = Hv/Hvm

As is clear from Tables 3 and 4, the welded joints of Inventive Examples obtained by resistance spot welding of steel sheets including at least one high-strength steel sheet were of good quality and had excellent shear tensile strength. In contrast, Comparative Examples failed to produce satisfactory welded joints.

Reference Signs List

    1, 2 STEEL SHEETS
    3 NUGGET
    4, 5 WELDING ELECTRODES
    6 HEAT-AFFECTED ZONE
    7 STEEL SHEET MATING SURFACE
    8 SHEET SEPARATION
    9 FIRST REGION
    10 RESISTANCE SPOT WELD

**Claims**

1.  A resistance spot welded joint having a resistance spot weld in which two or more steel sheets including at least one high-strength steel sheet are resistance spot welded, wherein

    the high-strength steel sheet has a chemical composition comprising, in mass%:

        C: 0.05 to 0.6%,
        Si: 0.1 to 2.0%,
        Mn: 1.5 to 4.0%,
        P: 0.10% or less,
        S: 0.005% or less,
        N: 0.001 to 0.010%, and
        O: 0.03% or less,
        the balance being Fe and incidental impurities; and

    the resistance spot weld is such that:

        a heat-affected zone has a first region that is a square region having an end of sheet separation as a central point of the square and having a segment with a length L (mm), the length of the segment satisfying expression (1) in relation to a thickness t (mm) of the high-strength steel sheet or the thinnest one of the high-strength steel sheets,
        an average hardness Hv of the first region satisfies expression (2) in relation to a hardness Hvm of a nugget central portion, and
        an average number density of carbide particles having a size of 100 nm or more is 10 particles or more per 5 $\mu m^2$ of a steel sheet cross section in the first region,

$$0.5 \times t \geq L \quad \cdots (1)$$

$$0.85 \times Hvm > Hv \quad \cdots (2).$$

2.  The resistance spot welded joint according to claim 1, wherein the chemical composition of the high-strength steel sheet further comprises, in mass%, one, or two or more selected from:

        Cu: 0.8% or less,
        Ni: 1.0% or less,
        Mo: 1.0% or less,
        Cr: 1.0% or less,
        Nb: 0.080% or less,

V: 0.50% or less,
Ti: 0.20% or less,
B: 0.005% or less,
Al: 2.0% or less, and
Ca: 0.005% or less.

3. The resistance spot welded joint according to claim 1, wherein the high-strength steel sheet has a coating layer on a steel sheet surface.

4. The resistance spot welded joint according to claim 2, wherein the high-strength steel sheet has a coating layer on a steel sheet surface.

5. A resistance spot welding method for producing the resistance spot welded joint described in any one of claims 1 to 4, comprising joining two or more overlapped steel sheets including at least one of the high-strength steel sheets by resistance spot welding, wherein
the resistance spot welding comprises:

   a main heating step of forming a nugget by applying a current $I_1$ (kA); and
   a tempering post-heat treatment step comprising:

   a first cooling process of maintaining the steel sheets in a non-energized state for a cooling time $t_{c1}$ (ms) shown in expression (3),
   a first heating process of subsequently applying a current $I_2$ (kA) shown in expression (4) for a current passing time $t_2$ (ms) shown in expression (5),
   a second cooling process of subsequently maintaining the steel sheets in a non-energized state for a cooling time $t_{c2}$ (ms) shown in expression (6), and
   a second heating process of subsequently applying a current $I_3$ (kA) shown in expression (7) for a current passing time $t_3$ (ms) shown in expression (8),

$$800 \leq t_{c1} \quad \cdots (3)$$

$$1.01 \times I_1 \leq I_2 \leq 1.4 \times I_1 \quad \cdots (4)$$

$$100 < t_2 \leq 500 \quad \cdots (5)$$

$$0 < t_{c2} \leq 300 \quad \cdots (6)$$

$$I_2 < I_3 \leq 1.5 \times I_2 \quad \cdots (7)$$

$$0 < t_3 < 500 \quad \cdots (8).$$

## FIG. 1

## FIG. 2

# FIG. 3

# FIG. 4

FIG. 5

FIG. 6

## INTERNATIONAL SEARCH REPORT

| International application No. |
|---|
| **PCT/JP2023/040491** |

| A. | CLASSIFICATION OF SUBJECT MATTER |
|---|---|

*C22C 38/00*(2006.01)i; *C22C 38/04*(2006.01)i; *C22C 38/58*(2006.01)i; *B23K 11/11*(2006.01)i; *B23K 11/16*(2006.01)i; *B23K 11/24*(2006.01)i
FI:   B23K11/11 540; B23K11/16 311; B23K11/24 315; C22C38/00 301U; C22C38/04; C22C38/58; C22C38/00 301T

According to International Patent Classification (IPC) or to both national classification and IPC

| B. | FIELDS SEARCHED |
|---|---|

Minimum documentation searched (classification system followed by classification symbols)
C22C38/00; C22C38/04; C22C38/58; B23K11/11; B23K11/16; B23K11/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2014/025063 A1 (NIPPON STEEL & SUMITOMO METAL CORPORATION) 13 February 2014 (2014-02-13)<br>entire text, all drawings | 1-5 |
| A | WO 2022/249650 A1 (JFE STEEL CORP) 01 December 2022 (2022-12-01)<br>entire text, all drawings | 1-5 |
| A | WO 2021/177254 A1 (JFE STEEL CORP) 10 September 2021 (2021-09-10)<br>entire text, all drawings | 1-5 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/040491**

| Patent document cited in search report | | | Publication date (day/month/year) | Patent family member(s) | | | Publication date (day/month/year) |
|---|---|---|---|---|---|---|---|
| WO | 2014/025063 | A1 | 13 February 2014 | US 2015/0217396 A1 entire text, all drawings CN 104520052 A KR 10-2015-0023926 A | | | |
| WO | 2022/249650 | A1 | 01 December 2022 | (Family: none) | | | |
| WO | 2021/177254 | A1 | 10 September 2021 | EP 4116455 A1 entire text, all drawings KR 10-2022-0127335 A CN 115210027 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6194765 B
- JP 6107939 B
- JP 6315161 B